(19) Europäisches Patentamt
European Patent Office
Office européen des brevets

(11) Publication number: **0 079 392**
**B1**

# (12) EUROPEAN PATENT SPECIFICATION

(45) Date of publication of patent specification: **26.08.87**

(51) Int. Cl.[4]: **C 07 F 7/28**

(21) Application number: **82901538.7**

(22) Date of filing: **25.05.82**

(86) International application number:
**PCT/JP82/00190**

(87) International publication number:
**WO 82/04254 09.12.82 Gazette 82/29**

## (54) COMPOSITE OXYALKOXIDES AND DERIVATIVES THEREOF.

(30) Priority: **25.05.81 JP 78882/81**
**25.05.81 JP 78883/81**

(43) Date of publication of application:
**25.05.83 Bulletin 83/21**

(45) Publication of the grant of the patent:
**26.08.87 Bulletin 87/35**

(84) Designated Contracting States:
**CH DE FR GB LI NL**

(56) References cited:
**GB-A-1 109 372**
**GB-A-1 265 070**

**Chemical Abstracts, Vol. 55, No. 23, 13.11.1961 (Columbus Ohio, U.S.A.) A.N. Nesmeyanov, "Synthesis of dialkoxy (aryloxy) titanium oxides by transesterification of di-n-propoxy-titanium oxide."**

(73) Proprietor: **NIPPON SODA CO., LTD.**
**2-1, Ohtemachi 2-chome**
**Chiyoda-ku Tokyo, 100 (JP)**

(72) Inventor: **KATO, Iwao**
**1438-15, Ninomiyacho-yamanishi**
**Naka-gun Kanagawa 259-01 (JP)**
Inventor: **NAKAMURA, Yoshihiko**
**3-403, Higiriyama 1-chome Konan-ku**
**Yokohama Kanagawa 233 (JP)**
Inventor: **YOSHIMOTO, Tetsuo**
**20-13, Koyawata 2-chome**
**Odawara-shi Kanagawa 256 (JP)**
Inventor: **IWAMORI, Masanori**
**2-4, Yushudai-higashi**
**Ichihara-shi Chiba 299-01 (JP)**
Inventor: **OZAWA, Kazuo**
**2-4, Yushudai-higashi**
**Ichihara-shi Chiba 299-01 (JP)**
Inventor: **ASAI, Makoto**
**2-4, Yushudai-higashi**
**Ichihara-shi Chiba 299-01 (JP)**

(74) Representative: **van der Beek, George Frans et al**
**Nederlandsch Octrooibureau Johan de Wittlaan 15 P.O. Box 29720**
**NL-2502 LS 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for producing composite oxyalkoxides represented by repeating units of the formula:

$$[MTiO_2(OR)_2] \quad (I)$$

in which M denotes the same or different alkaline earth metal atom(s) and R denotes the same or different groups being chosen from straight or branched chain alkyl groups having 1 to 6 carbon atoms, alkyl groups substituted by a hydroxyl group, alkoxy groups having 1 to 3 carbon atoms or chlorine, substituted or unsubstituted cycloalkyl groups, alkenyl groups and aralkyl groups and the number of repeating units being in the range of 1 to 20.

The composite oxides involving barium titanate and strontium titanate have particular dielectric piezo-electric, mechanical and chemical properties so that these composite oxides are a very important material in the electronic or the fine performance ceramic industry. The said oxides hitherto have been manufactured by solid phase reactions at high temperatures. For example, a titanate salt of an alkaline earth metal has been prepared by reacting titanium oxide with an alkaline earth metal carbonate at a high temperature. The said reaction step is represented by the following reaction:

$$TiO_2+MCO_3 \rightarrow MTiO_3+CO_2$$

(wherein M denotes an atom of an alkaline earth metal)

However, the composite oxides obtained with above process contain a comparatively large amount of impurity and further, as to reactants of the composition, for example, in producing the titanate salt of alkaline earth metal, the reaction product does not necessarily show a stoichiometric value, even if its reaction is carried out under well defined conditions by choosing a specific atomic ratio (Ti/M) of titanium (Ti) to alkaline earth metal (M). Further, the said composite oxides obtained above have a granular diameter of several µm or more with a broad granular size distribution. Consequently, the composite oxides obtained by the above process do not have the high efficient capacity of an electronic raw material which requires a small particle size.

As a process for producing the composite oxides and overcoming the drawback of the said solid phase reaction, a method for performing a chemical reaction in solution (hereinafter, this is abbreviated as "the solution method") is proposed. Generally, the solution method has the following advantages.

(1) A purifying step can be comparatively easily carried out to obtain a high purity material.

(2) The obtained material has a granular diameter of one nanometer or less with a narrow granular size distribution range.

(3) An addition of the third material is easily carried out and even if a minor amount is added, a homogeneous composition can be obtained and a material having the desired features can be obtained.

However, the process for producing the composite oxide with the conventional solution method involves various drawbacks, so that it can not be adapted for the industrial production of the composite oxide.

For example in the process for producing finely pulverized particles of barium titanate ($BaTiO_3$) by reacting an aqueous solution containing barium hydroxide [$Ba(OH_2)$] with titanium alkoxide [$Ti(OR)_4$] as disclosed in J.A.C.S. *77*, 6194 (1954) and J. Amer. Ceram. Soc. *49* 291 (1966), it is difficult to obtain a product with a stoichiometric titanium/barium (Ti/Ba) ratio.

In the process for hydrolyzing a mixed alcoholic solution of barium alkoxides [$Ba(OR)_2$] and titanium alkoxides [$Ti(OR)_4$] and producing barium titanate [$BaTiO_3$], as disclosed in U.S. patent 3,647,364 and in another process for producing strontium titanate by using strontium alkoxides [$Sr(OR)_2$] instead of the said barium alkoxides using the same procedure, as disclosed in the J. Amer. Ceram. Soc. *53* 91 (1970), the alkaline earth metal alkoxides used as the raw material are expensive and it is difficult to obtain the raw material and thus these processes are not practical.

In the process for producing barium titanate [$BaTiO_3$] by using a compound other than the titanium alkoxide, as a titanium source such as reacting barium hydroxide [$Ba(OH)_2$] with titanium tetrachloride [$TiCl_4$] as disclosed in U.S. Patent 3,725,539 and in another process for producing barium titanate [$BaTiO_3$] by treating barium chloride [$BaCl_2$] and titanium tetrachloride [$TiCl_4$] with hydrogen peroxide [$H_2O_2$], as disclosed in Japanese Open Patent Application No. 69599/1974, it is difficult to obtain a stoichiometric titanium/barium ratio and the reaction conditions are complicated.

In the process for producing the barium titanate by the thermal decomposition of titanyl barium oxalate which is obtained by reacting a mixed solution containing titanium and barium ions and oxalic acid, as disclosed in U.S. Patent 2,758,911 the said titanyl barium oxalate is thermally decomposed at a high temperature i.e. 700°C or more and consequently, a coarsely grained crystals are produced and, it is also difficult to add a third material.

British patent 1,109,372 teaches the manufacture of mullite bricks wherein 5 parts of magnesium isopropyl titanate are added to a mixture of 100 parts of fused mullite and 0.5 parts of smoked rubber dissolved in 5 parts of benzene. The magnesiumisopropyl titanate has the formula [$Ti(-C_3H_7O)_2OMgO$] and the product is moulded to bricks.

An object of the present invention is to provide a useful composite oxyalkoxide and its derivatives.

Its another object is to provide an improved process for producing the composite oxides with the solution method.

As already stated above, the present invention comprises a process for producing a composite oxyalkoxide represented by repeating units of the formula:

$$[MTiO_2(OR)_2] \qquad (I)$$

in which M denotes the same or the different alkaline earth metal atom(s) an R denotes the same or different groups chosen from straight or branched chain alkyl groups having 1 to 6 carbon atoms alkyl group substituted by a hydroxyl group, alkoxy groups having 1 to 3 carbon atoms or chlorine, substitued or unsubstituted cycloalkyl groups, alkenyl groups and aralkyl groups and the number of repeating units being in the range of 1 to 20. The process is characterized by reacting an alkoxy titanium having the general formula (II):

$$Ti(OR)_4 \qquad (II)$$

with an alkaline earth metal hydroxide having the general formula (III):

$$M(OH)_2 \qquad (III)$$

or a reagent mixture producing such a hydroxide, in the presence of an organic solvent or by reaction of lower alkoxy titanium and alkaline earth metal hydroxide or a reagent mixture producing such an hydroxide and further reacting the said composite oxyalkoxide with an alcohol(s) having the above (—OR) group.

The invention further comprises composite oxyalkoxide derivatives of the formula (I) where the —OR group is partially or totally substituted with a chelating agent.

In the composition formula (I) of the present invention, M denotes calcium, magnesium, barium and/or stronium. R denotes for instance a methyl, ethyl, propyl, isopropyl, butyl, tertiary-butyl, or hexyl group, an alkyl group substituted by a hydroxyl group, an alkoxy group having 1 to 3 carbon atom(s) or halogen, such as 1,4-butane diol residue, glycol residue or cellosolve residue, a substituted or unsubstituted cycloalkyl group such as a cyclohexyl group or 1-methylcyclopentyl group, an alkenyl group such as an allyl group or a crotyl group, and a substituted or unsubstituted aralkyl group such as a benzyl group, phenylethyl group and furthermore R denotes the same or different of above mentioned substituent(s).

Examples of composite oxyalkoxides of the present invention are oligomers of the compounds having repeating units of the formulae.

$BaTiO_2[OCH(CH_3)_2]_2$, $SrTiO_2[OCH(CH_3)_2]_2$, $BaTiO_2[O(CH_2)_3CH_3]_2$,

$SrTiO_2[O(CH_2)_3CH_3]_2$, $BaTiO_2[O(C_6H_{10})\text{-}2\text{-}C_2H_5]_2$, $BaTiO_2(OCH_2 \cdot C_6H_5)_2$,

$BaTiO_2(OCH_2 \cdot CH_2OH)_2$,

$BaTiO_2(OCH_3)_a[OCH(CH_3)_2]_b$ where $a+b=2$,

$SrTiO_2(OCH_3)_a[OCH(CH_3)_2]_b$ where $a+b=2$ and

$Ba_xSr_yTiO_2[O(CH_2)_3CH_3]_2$ where $x+y=1$.

The present invention further comprises composite oxyalkoxide derivatives, wherein the substituent represented by [—OR] in the formula (I) is partially or totally substituted by a chelating agent having two or more intermolecular functional groups, for example, the said chelating agent having two or more groups chosen from: a hydroxy group, amino group or carbonyl group such as β-diketones such as acetylactone or benzoyl acetone α- or β-keto acids, comprising acetoacetic acid, propionylbutyric acid, benzoylacetic acid or acetylformic acid, α- or β-keto acid esters such as methyl, ethyl, propyl, or butyl esters of the said keto acid, α- or β-oxy acid such as glycollic acid or, lactic acid, α- or β-oxy acid esters such as the methyl, ethyl, propyl, or butyl ester of the said oxy acid, α- or β-oxy ketones such as diacetone alcohol or acetoin, α- or β-oxy aldehydes such as glycollic aldehyde or aldol, α-amino acids such as glycine or alanine and α- or β-amino alcohols such as aminoethyl alcohol. It will be obvious that also a combination of the groups is possible.

Examples of the composite oxyalkoxide derivatives of the present invention are oligomers having 2 to 20 repeating units of the formulae.

$BaTiO_2[OCH(CH_3)_2] \cdot (OCOCH_2COCH_3)$,

$SrTiO_2[O(CH_2)_3CH_3][(OCH_2CH_2)_2N(CH_2)_2OH]_{1/2}$

$Ba_xSr_yTiO_2[OCH(CH_3)COO]$, where $x+y=1$.

The composite oxyalkoxides and its derivatives of the present invention are soluble in organic solvents and a highly concentrated solutions can be obtained depending on the kind of the solvent used. Further, the titanate salt(s) of alkaline earth metals can be easily produced by the hydrolysis or a thermal decomposition of these solutions.

When the organic solvent solution of the composite oxyalkoxides and/or its derivatives is directly hydrolysed or a thermally decomposed fine granular particles of the alkaline earth metal titanate salt are obtained. A solution in an organic solvent of the composite oxyalkoxides of the invention can be used for the production of a film upon a thermoresistant base plate such as glass, ceramic or metal plate. The solution is applied onto the plate by dipping or spraying, and the plate is then subjected to heat treatment causing evaporation of the solvent and decomposition of the compound resulting in a film of the alkaline earth metal titanate salt on the base plate. The addition of a solvent soluble polymer in said solution results in a a film or fiber by means of hydrolysis or thermal decomposition.

For the production of the oxyalkoxides of the invention the titanium alkoxide having the general formula (II) can be chosen from a titanium alkoxide containing the "R substituent" corresponding with the desired oxyalkoxide or its derivative. The preferred titanium alkoxides are obtained by first producing a composite oxyalkoxide with the lower alkoxy titanium as a raw material and then reacting the product obtained with an alcohol having the desired [—OR] group. Preferred are tetramethoxy titanium, tetraisopropoxy titanium, tetrabutoxy titanium or diethoxy-diisopropoxy titanium. Tetraisopropoxy titanium and tetrabutoxy titanium which are industrially manufactured and can easily be obtained are especially preferred.

The composite oxyalkoxydes having different kinds of [—OR] groups are obtained by producing a composite oxyalkoxide and further reaction with an alcohol with the desired [—OR] group.

As the alkaline earth metal hydroxide having the general formula (III) its anhydrous salt may be used and the said anhydrous salt is preferred to prevent the hydrolysis of the used titanium alkoxide and the resulting composite oxyalkoxides.

The synthesis of the composite oxyalkoxide of formula (I) proceeds in the presence of an organic solvent. The use of an organic solvent having a boiling point above that of the alcohol produced is preferred because the alcohol formed during the reaction, has to be removed from the reaction system. The use of an organic solvent having a high polar nature is undesirable since it stabilizes the titanium ion and lowers the reaction velocity, when the substituent [—OR] group in a substitution reaction is totally or partially replaced by another substituent, an alcohol is preferred as organic solvent.

The reaction is carried out in the presence of an inert gas such as $N_2$ gas and argon gas or a vapour atmosphere generated from the alcohol or the solvent used. The inert gas is used to prevent hydrolysis and to prevent the formation of carbonate salts which could be formed by intermingling carbon dioxide gas with reactant. The reaction temperature and the reaction time are chosen depending on the kinds of the raw materials and the organic solvent(s) employed. Generally, the reaction temperature is chosen in the range of 50°C to 300°C, preferably 100°C to 250°C and the reaction time is chosen in the range of 0.5 to 60 hour(s), preferably 1.0 to 15 hour(s). In a specially preferred embodiment, the reaction is performed by refluxing the organic solvent for 1.0 to 3.0 hour(s).

A solid and/or liquid non-reacted raw material the by-products and the reaction solvent can be separated from the composite oxyalkoxide in the reaction mixture by conventional methods for separating a liquid component from a solid component such as filtration or gas-liquid separation such as concentration and distillation.

Generally, the said composite oxyalkoxide is a monomer or an oligomer which is represented by the formula (I) having an average number of the repeating unit in the range of 1 to 20 which varies depending on the kind of the raw materials, its blending ratio, the type and amount of solvent used and the reaction conditions such as reaction temperature and reaction time and after treatment conditions. An oligomer having the said average number of repeating units of 4 to 12 is obtained under usual conditions.

Moreover, the said composite oxyalkoxides may be obtained with the process as set forth below:

(a) The reaction of an alkoxy titanium with a M-alkoxide in the presence of 2 moles of water for each mole of said M-alkoxide where M denotes an alkaline earth metal.

(b) The reaction of a M-oxide as a substitute reactant for the M-hydroxide with alkoxy titanium in the presence of an equimolar amount of water with respect to the said M-oxide and the said alkoxy titanium.

(c) The conversion of a reaction compound of the alkoxy titanium and the water [$TiO(OR)_2$] with the said M-oxide.

The composite oxyalkoxide derivative can further be synthesized by a process which comprises adding a chelating agent to a solution containing the said composite oxyalkoxide and finishing completely its reaction. Of course, it can be also synthesized by a process in which the composite oxyalkoxides, once recovered is reacted with the chelating agent in an organic solvent. This synthesis is carried out under the exclusion of air for the same reason as in the synthesis of the composite oxyalkoxide. The reaction conditions vary depending on the kind of the said composite oxyalkoxides and the chelating agent, the kind of solvent, and its amount. Generally, the reaction temperature is chosen in the range of 0°C to 300°C, preferably the range of 20°C to 250°C and the reaction time is chosen in the range of 0.5 to 10 hour(s), preferably in the range of 1.0 to 5.0 hour(s).

The composite oxyalkoxide derivative obtained above is a monomer or oligomer having an average

number of repeating units in the range of 1 to 20. Usually, the oligomer having the said average number of 4 to 12 is obtained under usual reaction conditions.

Further, the distribution extent of the number of repeating units can be narrowed in a similar way as was carried out for the composite oxyalkoxides.

Brief illustrations to the drawings

The Fig. 1 to the Fig. 5 show one example for the infrared ray absorption curves of the composite oxyalkoxides and these derivatives.

Fig. 1: $BaTiO_2(OCH_3)_{1.8}[OCH(CH_3)_2]_{0.2}$
Fig. 2: $SrTiO_2(OCH_3)_{1.9}[OCH(CH_3)_2]_{0.1}$
Fig. 3: $BaTiO_2(OCH_2CH_2CH)_2$
Fig. 4: $BaTiO_2(OCH_3)_{1.4}[OCH(CH_3)_2]_{0.6}$
Fig. 5: $BaTiO_2[OCH(CH_3)_2](OCOCH_2COCH_3)$

The best modes for performing the invention

The present invention is illustrated by Examples and Applied Examples, Example 1:

$$nM(OH)_2+nTi(OR)_4\rightarrow[MTiO_2(OR)_2]_n+2nROH$$

26.5 g (0.155 mol) of $Ba(OH)_2$ as the $M(OH)_2$, 43.2 g (0.152 mol) of $Ti[OCH(CH_3)_2]_4$ as the $Ti(OR)_4$ and 60 mol of para-xylene were charged in to a four inlet 200 ml flask fitted with a refluxing device, an agitator and a thermometer.

The temperature of the reactants was raised while agitating in a nitrogen atmosphere, isopropanol initially distilled at a reaction temperature of 120°C.

The reaction was continued for two hours under refluxing of the p-xylene.

Meanwhile the originally white muddy solution changed to a light yellowish solution. 17 g (0.297 mol) of isopropanol was distilled off. After having filtered off one part of insoluble $BaCO_3$, the reaction solution was heated under reduced pressure and the para-xylene was distilled off and then, 50.7 g of light yellowish solid material was obtained.

This material was confirmed to have the isopropyl group by IR and NMR and, it was identified as having a composition formula of $BaTiO_2[OCH(CH_3)_2]_2$ by an elementary analysis of Ba and Ti.

Further, it was identified to have a molecular weight of 2,620 by freezing point depression measurement of a para-xylene solution and it was assumed to be an octamer.

Subsequently, various kinds of the composite oxyalkoxides were synthesized by varying $M(OH)_2$ and $Ti(OR)_4$ and using the same methods.

The synthesis and their results are set forth in Table 1:

TABLE 1

| Reaction formula | $nM(OH_2)+n \cdot Ti(OR)_4 \rightarrow [MTiO_2\ (OR)_2]_n+2nROH$ | | | | | | |
|---|---|---|---|---|---|---|---|
| No. | M | —OR | Solvent | Temperature/ time | Molecular weight | n | Elementary analysis Anal. Calc. |
| 1-(1) | Ba | $—OCH(CH_3)_2$ | para-xylene | 120°C/2 Hr | 2602 | 8 | Ba: 40.6, 40.9<br>Ti: 14.5, 14.3 |
| 1-(2) | Ba | $—O(CH_2)_3CH_3$ | Diethyl-benzene | 104°C/2 Hr | — | — | Ba: 36.9, 37.8<br>Ti: 14.4, 13.2 |
| 1-(3) | Sr | $—O(CH_2)_3CH_3$ | Decalin | 185°C/11 Hr | — | — | Sr: 28.2, 27.9<br>Ti: 14.9, 15.3 |

Example 2

A solution consisting of 6.2 g (0.036 mol) of $Ba(OH)_2$ and 50 ml of methanol ($CH_3OH$) was charged into a four necked 200 ml flask fitted with a refluxing cooler, an agitator and a thermoeter.

The said solution was heated at 80°C in the presence of a nitrogen gas atmosphere and whilst maintaining the above temperature 9.6 g (0.034 mol) of $Ti[OCH(CH_3)_2]_4$ and 30 ml of isopropanol $[(CH_3)_2CHOH]$ were dropped into the said flask.

The isopropanol $[(CH_3)_2CHOH]$ and the methanol $[CH_3OH]$ were distilled off from the homogeneous reaction solution at a temperature of 80°C or less under a vacuum and 10.0g of the reaction product was obtained.

The said reaction product was identified as a compound having a composition formula: $BaTiO_2(OCH_3)_{1.8}[OCH(CH_3)_2]_{0.2}$ by IR and NMR and the elementary analysis.

Further, is was assumed to have a molecular weight of 1,190 by freezing point depression measurement of a para-xylene solution.

The IR curve of the obtained compound of $BaTiO_2(OCH)_{1.8}[OCH\&(CH_3)_2]_{0.2}$ is set forth in Fig. 1.

| | |
|---|---|
| The elementary analysis value: | Ba (49.6% Ti(16.9%) |
| The calculated value: | Ba (48.25) Ti (16.8%) |

Example 3

6.1 g (0.050 mol) of $Sr(OH)_2$ and 160 g of methanol ($CH_3OH$) were charged in the same apparatus employed in the Example 1. Those reactants were heated at a temperature of 65°C under agitation and refluxing of the methanol ($CH_3OH$).

After the methanol ($CH_3OH$) refluxing step, a solution consisting of 14.4 g (0.050 mol) of $Ti[OCH(CH_3)_2]_4$ and 35 g of benzene was dropped into the reaction system during 3 hours and thereby a reaction slurry was obtained.

The solvent was distilled off under reduced pressure and thereby, the product was obtained.

The product was identified as $SrTiO_2(OCH_3)_{1.9}[OCH(CH_3)_2]_{021}$ by IR and NMR and elementary analysis.

It was assumed to have a molecular weight of 1800 and to be an octamer.

The IR curve of $SrTiO_2(OCH_3)_{1.9}[OCH(CH_3)_2]_{0.1}$ is set forth in Fig. 2.

| | |
|---|---|
| Elementary analysis value: | SR: 37.2 (%) Ti: 21.0 (%) |
| Calculated value: | Sr: 37.7 (%) Ti: 20.6 (%) |

Example 4

3.4 g (0.01 mol) of $BaTiO_2[OCH(CH_3)_2]_2$ obtained in the Example 1-(1) was dissolved in 20 mol of xylene and whilst maintaining the solution at 80°C, 1.2 g (0.02 mol) of ethylene glycol was dropped into it and thereby a white precipitate was obtained. The white precipitate was filtered and dried, 3.4 g of the composition of $BaTiO_2(OCH_2CH_2OH)_2$ were obtained.

The IR curve of $BaTiO_2(OCH_2OH_2OH)_2$ as set forth in Fig. 3.

| | |
|---|---|
| The Elementary analysis value: | Ba (39.8%) Ti (14.2%) |
| The calculated value: | Ba (40.5%) Ti (14.1%) |

Example 5

3.4 g (0.01 mol) of the $BaTiO_2[OCH(CH_3)_2]_2$ obtained in the Example 1-(1) was dissolved in 20 mol of xylene and whilst maintaining the solution at 80°C, 2.2 g (0.02 mol) of benzyl alcohol was dropped into it and thereby a homogeneous reaction was obtained. After distilling off the xylene from the reaction mixture, 4.2 g of $BaTiO_2(OCH_2C_6H_5)_2$ were obtained.

It was assumed to be a tetramer having a molecular weight of 1800.

| | |
|---|---|
| The Elementary analysis value: | Ba (31.3%) Ti (11.3%) |
| The calculated value: | Ba (31.8%) Ti (11.1%) |

Example 6

8.6 g (0.05 mol) of Ba(OH), 28,4 g (0.1 mol) of $Ti[OCH(CH_3)_2]_4$ and 50 ml of decalin were charged in the same apparatus employed in Example 2 and they were heated at 190°C and simultaneously agitated and isopropanol was distilled off in the solvent refluxing step. After having finished the reaction in three hours, a homogeneous reaction solution was obtained. The solvent was distilled off from the said reaction solution under vacuum and the product was dried to yield $Ba_{0.5} \cdot Sr_{0.5}\text{-}TiO_2[OCH(CH_3)_2]_2$

Example 7

3.7 g (0.020 mol) of $Ti[OCH(CH_3)_2]_4$, 3.2 g (0.020 mol) of BaO and 30 ml of methanol were charged in the same apparatus employed in the Example 2 and by heating at 65°C under agitation and refluxing, the reaction was carried out for two hours and thus, a homogeneous reaction solution was obtained.

The solvent was distilled off from the said reaction solution and the residue was dried to yield $BaTiO_2(OCH)_{1.4}[OCH(CH_3)_2]_{0.6}$.

The corresponding IR curve is set forth in Fig. 4.

| | |
|---|---|
| The elementary analysis value: | Ba (50.9%) Ti (20.1%) |
| The calculated value: | Ba (52.6%) Ti (18.3%) |

Example 8

28.5 g (0.085 mol) of the $BaTiO_2[OCH(CH_3)_2]_2$ prepared in the Example 1-(1) and 22.8 g of para-xylene were charged into a four necked 200 ml flask fitted with a reflux cooler, an agitator and a thermometer. 8.5 g (0.85 mol) of acetylacetone ($CH_3COCH_2COCH_3$) was gradually dropped into the above reactants at room temperature in a nitrogen gas atmosphere.

During the dropwise addition, an exothermic reaction occurs and a partial precipitation takes place. Then, the reaction mixture was heated to about 100°C and isopropanol was initially distilled off. Simultaneously, the precipitate dissolved.

4.3 g (0.072 mol) of the isopropanol was distilled off by heating over about two hours.

The obtained reaction solution was transparent. No precipitate was formed even when exposed to the atmosphere during six hours.

The solvent was distilled off from the obtained reaction solution at a temperature of 50°C or less and under reduced pressure. 32.1 g of the product was obtained.

The said product was identified as a compound having a formula: $BaTiO_2[OCH(CH_3)_2][OCOCH_2COCH_2]_{1/2}$ by IR and NMR and elementary analysis.

Further, it was assumed to be a dimer having a molecular weight of 840 by freezing point depression measurement of a para-xylene solution.

The IR chart for the product obtained in this Example is set forth in Fig. 5.

| | |
|---|---|
| The elementary analysis value: | Ba (37.2 %) Ti (13.4 %) |
| The calculated value: | Ba (36.6 %) Ti (12.8 %) |

Example 9

25.0 g (0.080 mol) of the $SrTiO_2[O(CH_2)_3CH_3]$ prepared in the Example 1-(3) and 50 ml of decalin were charged in the same apparatus employed in Example 8. 6.0 g (0.040 mol) of triethanolamine was gradually added to it at room temperature and in the presence of nitrogen gas atmosphere. During which an exothermic reaction occurs. The temperature was further increased by heating and at about 125°C n-butanol started to distill off. The n-butanol was distilled off in an amount of 5.7 g (0.077 mol).

The reaction solution was transparent without any sedimentation, even when it was exposed to the atmosphere for 6 hours. A gelled material obtained above was heated at a temperature of 90°C or less under reduced pressure and thereby the decalin was distilled off and thus, 25.4 g (0.081 mol) of the product was obtained.

The said product was identified as $SrTiO_2[O(CH_2)_3CH_3] \cdot [(OCH_2CH_2)_2N(CH_2)_2OH]_{1/2}$ by means of IR and NMR and elementary analysis. Further, it was assumed to be a heptamer having a molecular weight of 2,050 by the freezing point depression of measurement of a para-xylene solution.

| | |
|---|---|
| The elementary analysis value: | Sr (28.4%) Ti (15.2%) |
| The calculated value: | Sr (27.9%) Ti (15.3%) |

Reference Example

The stability of the composite oxyalkoxide obtained is the Examples 1-(1) and 1-(3) is compared with the stability of the composite oxyalkoxide derivatives obtained in the Examples 8 and 9. This comparison results are set forth in Table 2.

TABLE 2

| | Stability of the solid |
|---|---|
| Example 8 | Even if exposed to the atmosphere for one day, its weight was not decreased and no change appeared in the IR chart. |
| Example 9 | Ditto as above. |
| Example 1-(1) | After exposure to the atmosphere, its weight was not decreased and the absorption of TiO-iPr in the IR chart was decreased. |
| Example 1-(3) | After exposure to the atmosphere during one day, its weight was not decreased and the absorption of TiO-nBu in the IR chart was decreased. |

Applied Example 1

10 g (0.0298 mol, calculated as the monomer) of the compound of $BaTiO_2[OCH(CH_3)_2]_2$ synthesized in the Example 1-(1) was dissolved in about 100 ml of para-xylene and it was heated at a temperature of 90°C to 100°C. 1.07 g (0.060 mol) of water was gradually dropped into the above reactants by a micro-syringe under heating. In the course of two hours, the precipitate formed was filtered off and the filtrate was washed with water and dried at 100°C under reduced pressure and thus, 6.9 g of $BaTiO_3$ with 99.3 % yield was obtained. The said $BaTiO_3$ was identified as a cubic Crystal (a=4.051) by an X ray diffraction analysis.

It was a coagulated material having a diameter of 1 to 2 μm which consists of coagulated fine particles having a granular diameter of 0.1 μm as it was established by using an electron scanning microscope.

Applied Example 2

5 g (0.0149 mol) of the $BaTiO_2[OCH(CH_3)_2]_2$ synthesized in the Example 1-(1) was calcined at 900°C for two hours under air ventilation, whereby 3.5 g (0.0149 mol) of $BaTiO_3$ powder was obtained. This material was identified as a cubic crystal (a=4.0 b=26 & c=4,000) by X ray diffraction. Study with an electron scanning microscope, revealed that it is a coagulated material having a diameter of 1 to 2 μm consisting of fine particles of 0.2 μm diameter.

Applied Example 3

5.9 g (0.018 mol) of the $BaTiO_2[OCH(CH_3)_2]_2$ synthesized in the Example 1-(1) was dissolved in 40.1 g of n-butanol to give a solution containing 8.9 weight percent of the converted $BaTiO_3$. A silica glass plate, width (30 mm)×length (50 mm)×thickness (3 mm), was immersed in the said solution for one minute in the presence of a nitrogen atmosphere and the silica glass plate was lifted at a constant velocity of 3 cm/minute. The solvent was blown off from the said silica glass plate in the presence of nitrogen gas and then, it was dried in air at 100°C for one hour and subsequently, it was baked in an electric furnace at 700°C for 3 hours. Thus, a semi-transparent film of $BaTiO_3$ was obtained.

Applied Example 4

One part of the homogeneous solution obtained in the Example 1-(2) was sampled in a petri dish and it was exposed to the air and thereby it changed to a transparent gelled compound. It was dried by irradiation with an infrared lamp, whereby it decomposed into fine particles. It was identified by IR and elementary analysis as a powder of $BaTiO_2O_3$.

The fine particles were baked at 700°C for two hours and the particles of $BaTiO_3$ having a cubic crystal structure were obtained.

It was a coagulated material having a size of 1 to 2 μm which consists of fine particles having a granular diameter of 0.1 μm or less.

Applied Example 5

15.5 g (0.043 mol) of the powders obtained in the Example 8 were dissolved in 370 g of n-butanol to give a solution containing 5 weight percent of the converted $BaTiO_3$. The solution was stable even if it was exposed to the air. A quartz glass plate, width (30 mm)×length (50 mm)×thickness (3 mm), was immersed in the said adjusted solution in the presence of the air. For one minute, the quartz glass plate was lifted up at a constant velocity of 40 cm/minute.

It was air-dried for 10 minutes and further, it was dried at 100°C for one hour and then, it was baked in an electric furnace for 3 hours, whereby a transparent film of $BaTiO_3$ was obtained.

Applied Example 6

The composite oxyalkoxides and the composite oxyalkoxide derivatives obtained in the Examples 2 to 9 were hydrolyzed or thermally decomposed and thereby the salts of alkaline earth metal titanate were obtained. These results are set forth in Table 3.

TABLE 3

| Example No. | Decomposition process | The reaction compound | | |
|---|---|---|---|---|
| | | Composition formula* | External appearance* | Granular diameter** |
| 2 | Hydrolysis | $BaTiO_3$ | crystal | 0.1 µm or less |
| 3 | Thermal decomposition | $SrTiO_3$ | crystal | 0.1 µm or less |
| 4 | Thermal decomposition | $BaTiO_3$ | crystal | 0.1 µm or less |
| 5 | Hydrolysis | $BaTiO_3$ | crystal | 0.1 µm or less |
| 6 | Thermal decomposition | $Ba_{0.5} \cdot Sr_{0.5} \cdot TiO_3$ | crystal | 0.1 µm or less |
| 7 | Hydrolysis | $BaTiO_3$ | crystal | 0.1 µm or less |
| 8 | Thermal decomposition | $BaTiO_3$ | crystal | 0.1 µm or less |
| 9 | Thermal decomposition | $SrTiO_3$ | crystal | 0.1 µm or less |

Note
* : By the X ray diffraction method
**: By electronscanning microscope

Industrial utilization

The composite oxyalkoxides and their derivatives obtained by the present invention are useful, organo-metal compounds for producing titanate salts of alkaline earth metals by the solution method and these compounds and its derivatives have the following features.

(1) The composite oxyalkoxides and their derivatives are able to produce easily the titanate salts of alkaline earth metal by means of hydrolysis or thermal decomposition under appropriate conditions.

(2) The composite oxyalkoxides and their derivatives are soluble in organic solvents and consequently, by adding a moulding agent, films, plates or fibers can be produced. Further, when the said formed or non-formed material are treated by a hydrolysis step or a thermally decomposing step the titanate salts of alkaline earth metals, in fine particle form are obtained.

(3) The composite oxyalkoxides and their derivatives are soluble in organic solvents so that by adding preliminarily a shifter, a depressor, a semi-conductively denaturing agent or a sintering aid to the titante salt(s) of alkaline earth metal, a homogeneous mixture is obtained.

(4) The composite oxyalkoxides and their derivatives have a stoichiometric ratio of Ti/M as, so that a stoichiometric ratio of Ti/M in the titanate salt(s) of alkaline earth metal is obtained by a hydrolysis or thermal decomposition.

(5) By using the raw material, obtained easily at a comparatively low cost, a simple manufacturing process can be carried out.

(6) The composite oxyalkoxide derivative have superior storage stability in comparison with the composite oxyalkoxides.

**Claims**

1. A process for producing composite oxyalkoxides represented by repeating units of the formula

$$[MTiO_2(OR)_2] \qquad (I)$$

in which M denotes the same or different alkaline earth metal atom(s) and R denotes the same or different groups being chosen from straight or branched chain alkyl groups having 1 to 6 carbon atoms, alkyl group substituted by a hydroxyl group, alkoxy groups having 1 to 3 carbon atoms or chlorine, substituted or unsubstituted cycloalkyl groups, alkenyl groups and aralkyl groups and the number of repeating units being in the range of 1 to 20, characterized by reacting an alkoxy titanium having the general formula (II):

$$Ti(OR)_4 \qquad (II)$$

with an alkaline earth metal hydroxide having the general formula (III):

$$M(OH)_2 \qquad (III)$$

or a reagent mixture producing such a hydroxide, in the presence of an organic solvent or by reaction of lower alkoxy titanium and alkaline earth metal hydroxide or a reagent mixture producing such an hydroxide and further converting the said composite oxyalkoxide with an alcohol(s) having the above (—OR) group.

2. The process of claim 1, characterized in that the said lower alkoxy titanium is tetraisopropoxy titanium or tetrabutoxy titanium.

3. The process of claim 1 or 2, characterized in that the reaction is carried out for 1 to 3 hours at refluxing temperature in the presence of a non-polar organic solvent.

4. A composite oxyalkoxide derivative in which the —OR group of the composite oxyalkoxides of the claim 1, is partially or totally substituted by a chelating agent as in claim 1.

5. A composite oxyalkoxide derivative according to claim 4, the said chelating agent comprising the same or different compounds being chosen from the chelating agents having two or more intermolecular functional groups such as β-diketones, α- or β-keto acids, α- or β-keto acid esters, α- or β-oxy-acids, α- or β-oxy-acid esters, α- or β-oxy-ketones, α- or β-oxy-aldehydes, α-amino acids, or α- or β-amino alcohols.

6. A process for producing composite alkoxides as claimed in claim 4 or 5 characterized by reacting the composite oxyalkoxides of claim 1 with the appropriate chelating agent.

7. The process of claim 6, characterized in that the reaction conditions comprise a reaction time of 1 to 50 hours at the reflux temperature of the non-polar organic solvent.

**Patentansprüche**

1. Verfahren zur Herstellung von gemischten Oxyalkoxiden wiedergegeben durch wiederkehrende Einheiten der Formel I:

$$MTiO_2(OR)_2 \qquad (I)$$

in der M gleiche oder unterschiedliche Erdalkaliatome bedeutet und R für gleiche oder unterschiedliche Gruppen ausgewählt aus gradkettigen oder verzweigtkettigen Alkylgruppen mit 1 bis 6 Kohlenstoffatome, Alkylgruppen substituiert durch eine Hydroxylgruppe, Alkoxygruppen mit 1 bis 3 Kohlenstoffatome oder Chlor, substituierte oder unsubstituierte Cycloalkylgruppen, Alkenylgruppen und Aralkylgruppen steht und die Anzahl wiederkehrender Einheiten 1 bis 20 beträgt, dadurch gekennzeichnet, daß man eine Alkoxytitanverbindung der allgemeinen Formel II:

$$Ti(OR)_4 \qquad (II)$$

mit einem Erdalkalihydroxid der allgemeinen Formel III:

$$M(OH)_2 \qquad (III)$$

oder einem Reagenzgemisch, das ein solches Hydroxid liefert, in Gegenwart eines organischen Lösungsmittels umsetzt oder eine neidere Alkoxytitanverbindung und ein Eradalkalihydroxid oder ein Reagenzgemisch, das ein solches Hydroxid Liefert, umsetzt und weiter das gemischte Oxyalkoxid mit einem (oder mehreren) Alkohol(en), der (die) die obige (—OR) Gruppe hat (haben), umsetzt.

2. Verfahren nach Anspruch 1, dadurch gekennzeichnet, daß die niedere Alkoxytitanverbindung Tetraisopropoxytitan oder Tetrabutoxytitan ist.

3. Verfahren nach Anspruch 1 oder 2, dadurch gekennzeichnet, daß die Umsetzung während 1 bis 3 h bei Rückflußtemperatur in Gegenwart eines nicht polaren organischen Lösungsmittels vorgenommen wird.

4. Gemischtes Oxyalkoxid-Derivat, bei dem die —OR Gruppe der Oxyalkoxide des Anspruchs 1 teilweise oder vollständig durch ein chelatbildendes Mittel ersetzt ist.

5. Gemischtes Oxyalkoxid-Derivat nach Anspruch 4, bei dem das chelatbildende Mittel die gleichen oder unterschiedliche Verbindungen umfaßt, ausgewählt aus chelatbildenden Mitteln, die zwei oder mehr intermolekulare funktionelle Gruppen haben, wie β-Diketone, α- oder β-Ketosäuren, α- oder β-

Ketosäureester, α- oder β-Oxysäuren, α- oder β-Oxysäureester, α- oder β-Oxyketone, α- oder β-Oxyaldehyde, α-Aminosäuren oder α- oder β-Aminoalkohole.

6. Verfahren zur Herstellung der gemischten Alkoxide nach Anspruch 4 oder 5, dadurch gekennzeichnet, daß man die gemischten Oxyalkoxide nach Anspruch 1 mit dem entsprechenden chelatbildenden Mittel umsetzt.

7. Verfahren nach Anspruch 6, dadurch gekennzeichnet, daß die Reaktionsbedingungen eine Reaktionszeit von 1 bis 50 h bei Rückflußtemperatur des nicht-polaren organischen Lösungsmittels umfassen.

**Revendications**

1. Procédé d'obtention d'oxyalcoxydes composites représentés par des motifs répétés de formule

$$[MTiO_2(OR)_2] \qquad (I)$$

dans laquelle M représente un ou plusieurs atomes de métal alcalino-terreux identiques ou différents et R represénte des groupes identiques ou différents choisis parmi les groupes alcoyles à chaîne ramifiée ou droite ayant 1 à 6 atomes de carbone, un groupe alkyle substitué par un groupe hydroxyle, des groupes alcoxy ayant de 1 à 3 atomes de carbone ou chlore, des groupes cycloalcoyles substitués ou non substitués, des groupes alcényles et des groupes aralcoyles et le nombre de motifs répétés étant dans la gamme de 1 à 20, caractérisé par la réaction d'un alcoxy titanate ayant la formule générale (II):

$$Ti(OR)_4 \qquad (II)$$

avec un hydroxyde de métal alcalino-terreux ayant la formule générale (III):

$$M(OH)_2 \qquad (III)$$

ou un mélange réactif produisant un tel hydroxyde, en présence d'un solvent organique ou par réaction d'alcoxy titante inférieur et d'hydroxyde de métal alcalino-terreux ou d'un mélange de réactifs conduisant à un tel hydroxyde et de plus la conversion dudit oxyalcoxyde composite avec un ou des alcools ayant ledit groupe (—OR).

2. Procédé selon la revendication 1, caractérisé en ce que l'alcoxy titane inférieur est le tétraisopropoxy titane ou le tétrabutoxy titane.

3. Procédé selon la revendication 1 ou 2, caractérisé en ce que la réaction est réalisée pendant une à trois heures à température de reflux en présence d'un solvant organique non polaire.

4. Dérivé d'oxyalcoxyde composite dans lequel le groupe —OR des oxyalcoxydes de la revendication 1 est partiellement ou totalement substitué par un agent chélatant.

5. Dérivé d'oxyalcoxyde composite selon la revendication 4, ledit agent chélatant comprenant des composés identiques ou différents choisis parmi les agents chélatants ayant deux ou plusieurs groupes fonctionnels intermoléculaires tels que β-dicétones, α- ou β-céto acides, esters d'α- ou β-céto acides, α- ou β-oxyacides, esters d'α- ou β-oxy-acides, α- ou β-oxycétones, α- ou, β-oxy-aldéhydes, acides α-aminés, α- ou β-amino alcools.

6. Procédé d'obtention d'alcoxydes composites tels que revendiqués dans les revendications 4 ou 5, caractérisé par la réaction des oxyalcoxydes composites de la revendication 1, avec un agent chélatant approprié.

7. Procédé selon la revendication 6, caractérisé en ce que les conditions de réaction comprennent un temps de réaction de 1 à 50 heures à la temperature de reflux d'un solvant organique non polaire.

( I )

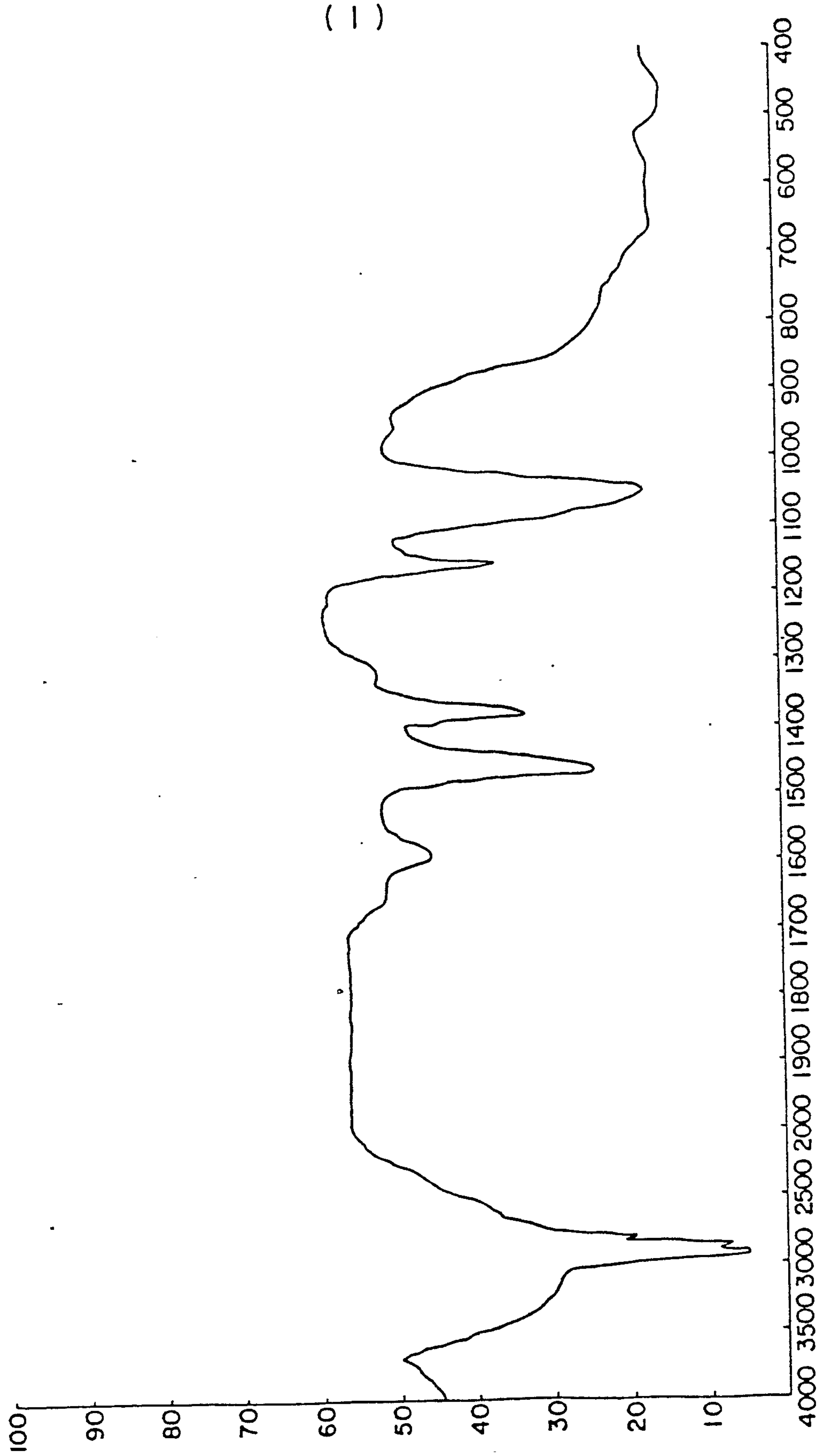
100
90
80
70
60
50
40
30
20
10
4000 3500 3000 2500 2000 1900 1800 1700 1600 1500 1400 1300 1200 1100 1000 900 800 700 600 500 400

(2)

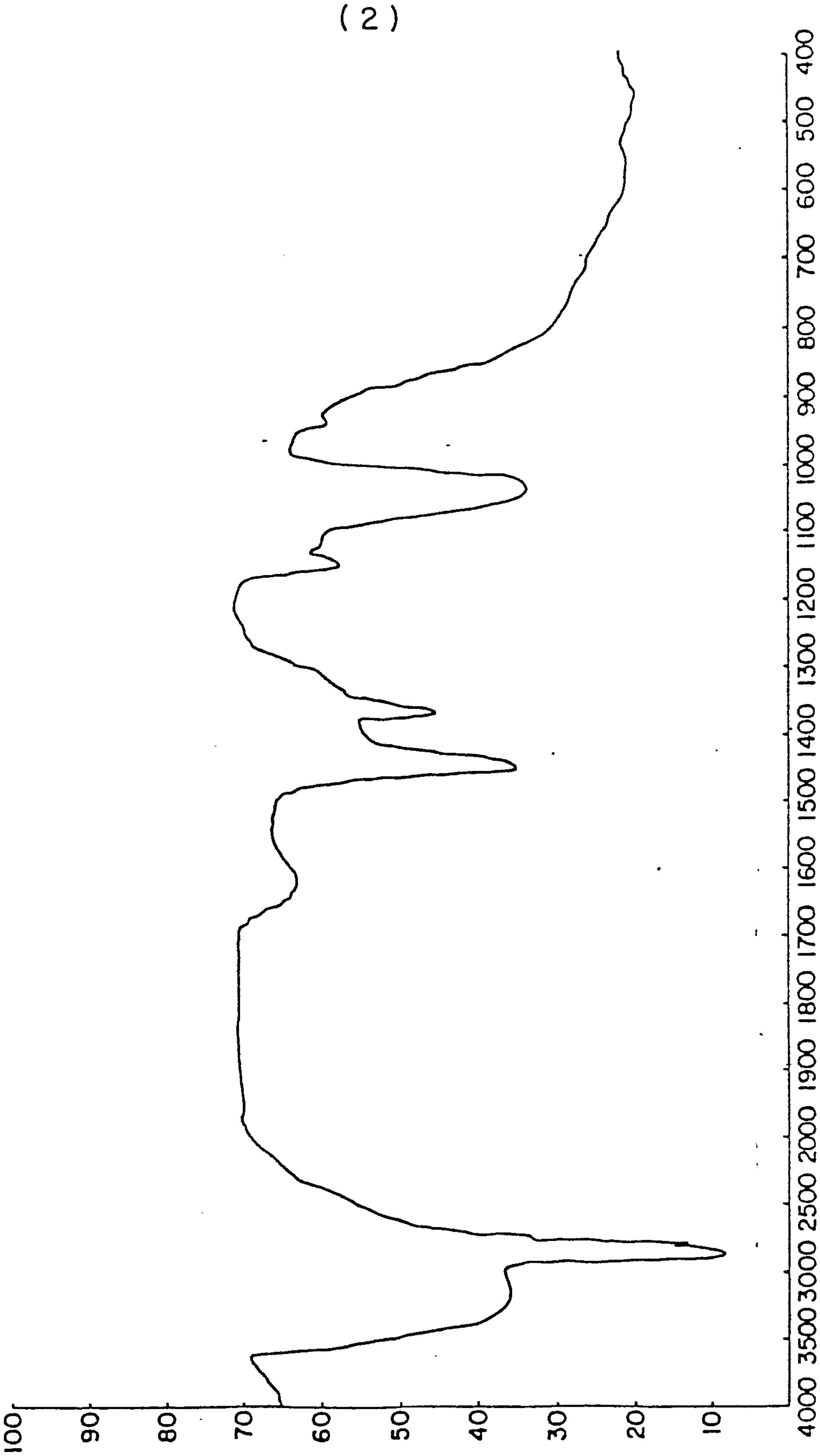
100
90
80
70
60
50
40
30
20
10
4000
3500
3000
2500
2000
1900
1800
1700
1600
1500
1400
1300
1200
1100
1000
900
800
700
600
500
400

( 3 )

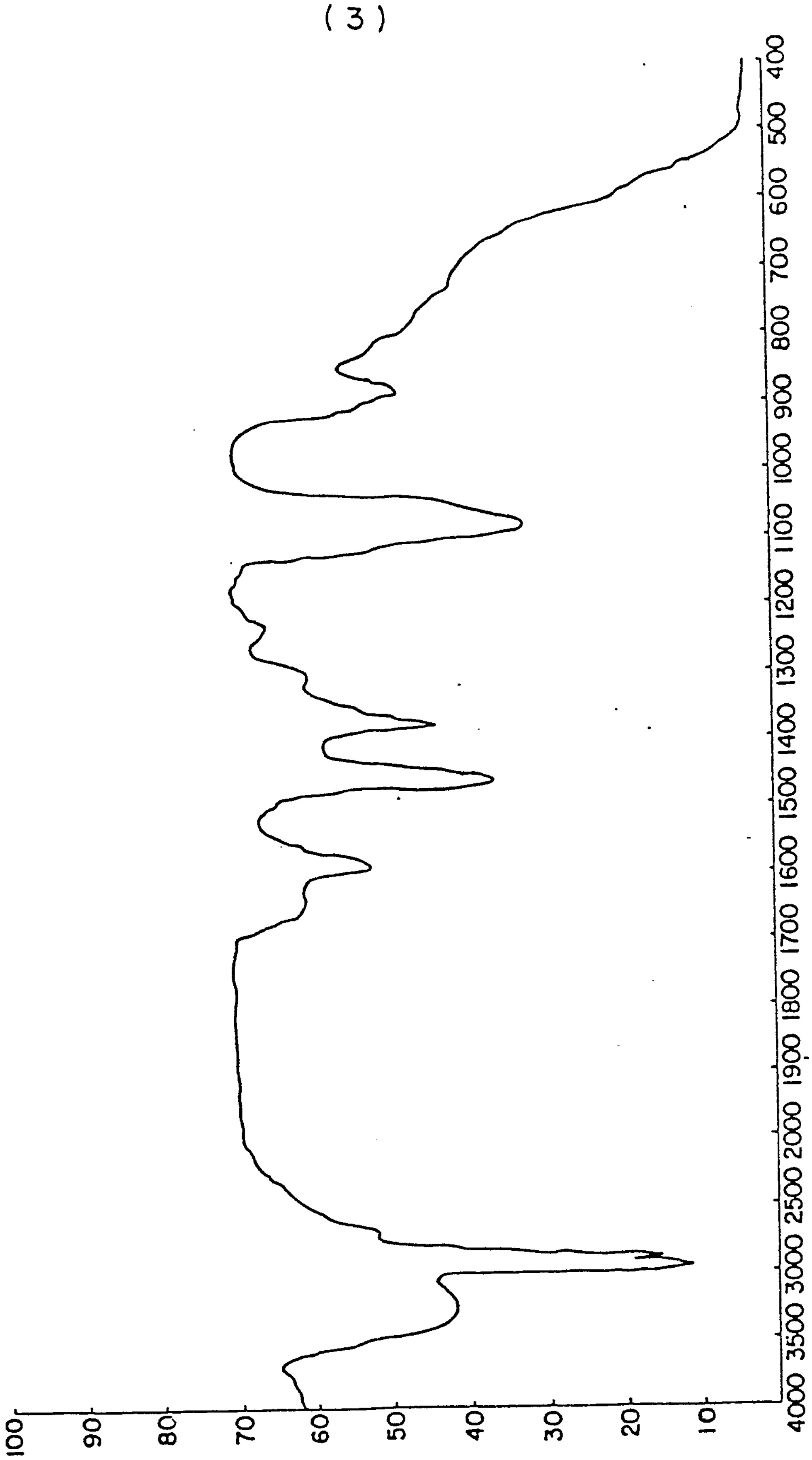
100
90
80
70
60
50
40
30
20
10
4000 3500 3000 2500 2000 1900 1800 1700 1600 1500 1400 1300 1200 1100 1000 900 800 700 600 500 400

(4)

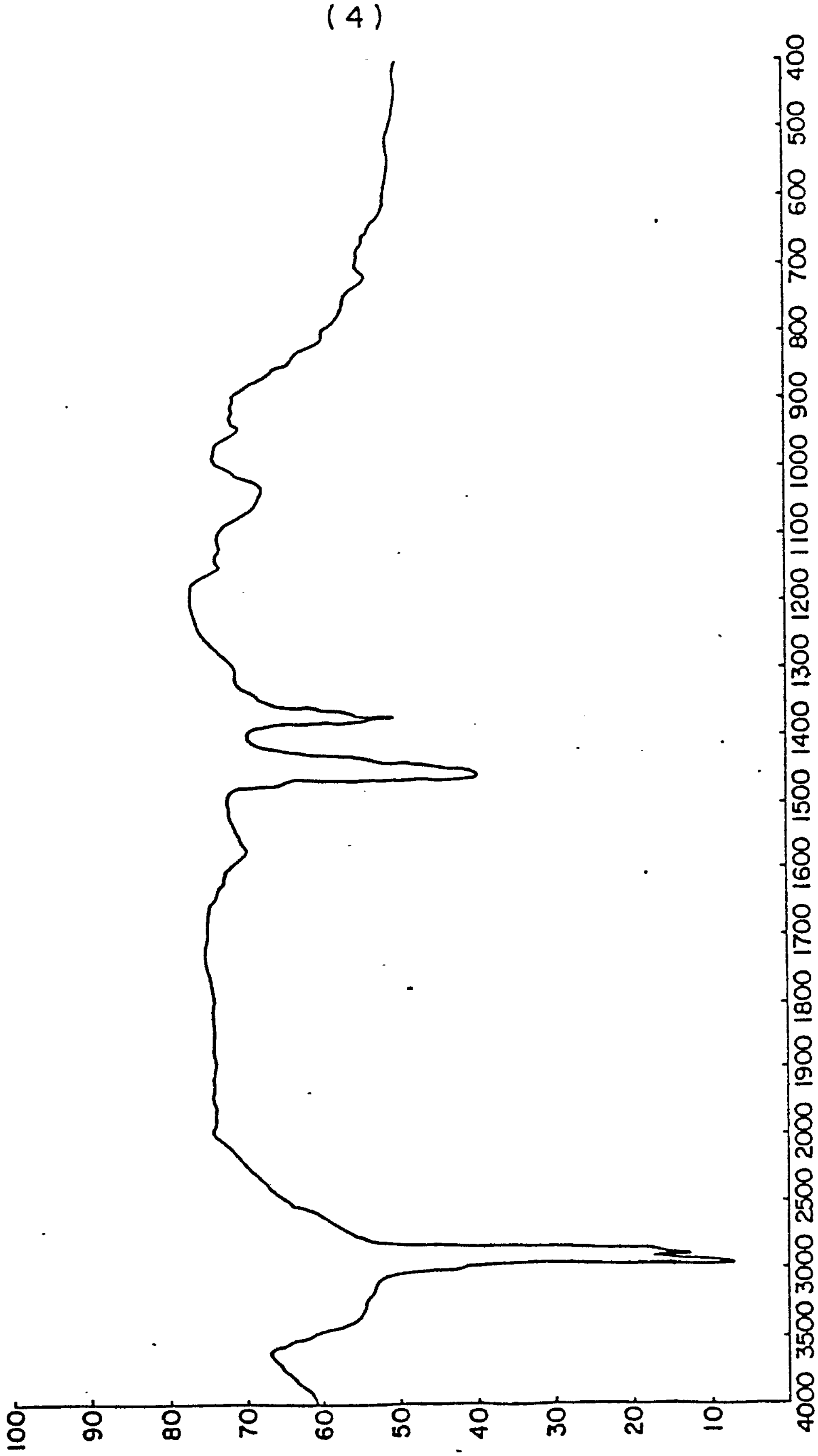
4000 3500 3000 2500 2000 1900 1800 1700 1600 1500 1400 1300 1200 1100 1000 900 800 700 600 500 400
100 90 80 70 60 50 40 30 20 10

( 5 )

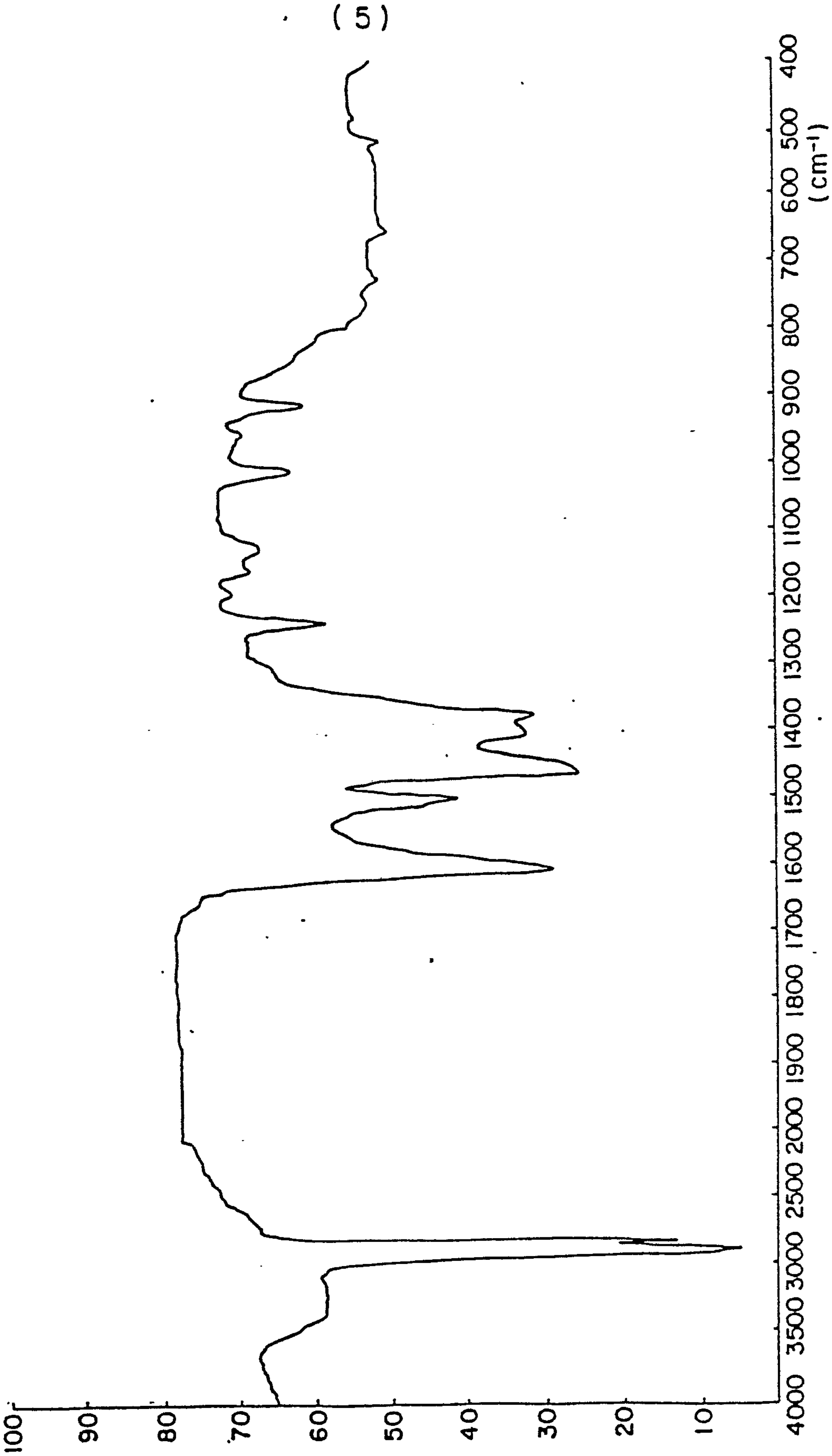
100
90
80
70
60
50
40
30
20
10
4000
3500
3000
2500
2000
1900
1800
1700
1600
1500
1400
1300
1200
1100
1000
900
800
700
600
500
400
(cm-1)